# EUROPEAN PATENT SPECIFICATION

(11) **EP 2 979 843 B1**
(45) Date of publication and mention of the grant of the patent: **08.01.2020**
(21) Application number: 14772776.2
(22) Date of filing: 20.03.2014
(51) Int. Cl.: B29C 55/08

(54) **TENTER OVEN AND METHOD FOR MANUFACTURING THERMOPLASTIC RESIN FILM**
SPANNRAHMENOFEN UND VERFAHREN ZUR HERSTELLUNG EINER THERMOPLASTISCHEN HARZFOLIE
FOUR DE RÉTRACTION ET PROCÉDÉ DE FABRICATION DE FILM DE RÉSINE THERMOPLASTIQUE

(30) Priority: 29.03.2013 JP 2013073953; 29.03.2013 JP 2013073954
(43) Date of publication of application: 03.02.2016
(73) Proprietor: Toray Industries, Inc., Tokyo 103-8666 (JP)
(72) Inventor: TAKADA, Takahiro, Otsu-shi Shiga 520-8558 (JP); ASO, Hiroyuki, Otsu-shi Shiga 520-8558 (JP); INOUE, Hiroyuki, Otsu-shi Shiga 520-8558 (JP)
(74) Representative: Kador & Partner PartG mbB
(86) International application number: PCT/JP2014/057813
(87) International publication number: WO 2014/156977

(56) References cited:
- WO-A1-2012/133152
- JP-A- S55 105 535
- JP-A- 2003 019 747
- JP-A- 2007 320 276
- JP-A- 2007 320 276
- JP-A- 2011 073 294
- JP-A- 2013 049 183
- JP-A- 2013 049 183

## Description

### Technical Field

The present invention relates to a tenter oven suited for the production of thermoplastic resin films and to a method of producing thermoplastic resin films using the tenter oven.

### Background Art

For the purpose of promoting mechanical characteristics of a thermoplastic resin film or of making the thickness of the film thin, or for the purpose of assuring the dimensional stability or the like, there are cases where the film is stretched in the film formation step. In general, methods of stretching a thermoplastic resin film include a sequential biaxial stretching method wherein an unoriented film is monoaxially stretched in the film transport direction and then the monoaxially oriented film is stretched in the transverse direction of the film in a tenter oven; and a simultaneous biaxial stretching method wherein an unoriented film is simultaneously stretched in the film transport direction and in the transverse direction of the film in a tenter oven.

The tenter oven used in carrying out biaxial stretching is an apparatus for performing treatments such as preheating, stretching, heatsetting and cooling on a thermoplastic resin film while gripping the both end portions of the film with clips equipped at both end portions in the transverse direction of the film, blowing air heated to a prescribed temperature through blowing ports onto the film surface to raise, lower or maintain the film temperature to or at a prescribed temperature.

In general, the tenter oven used for the production of a thermoplastic resin film is constituted by one or more zones corresponding to the treatment steps such as preheating, stretching, heatsetting and cooling, and is constituted such that the setting of the temperature of the respective zones can be changed independently. Each zone may be constituted by a single chamber or each zone may be partitioned into a plurality of chambers in the film transport direction such that the setting of the temperature of each chamber can be changed independently.

The tenter oven used for the production of a thermoplastic resin film usually has blowing ports and suction ports and has an air circulation mechanism wherein the air in the tenter oven is recovered by suction through the suction ports, the recovered air is heated or cooled to the preset temperature or its temperature is maintained at the preset temperature with a heat exchanger, and the air is then blown again from the blowing ports by a circulation fan. By setting the temperature of the air to be blown by the air circulation mechanism at a prescribed temperature, the film temperature can be raised to, lowered to, or maintained at the prescribed temperature.

In some cases, the tenter oven used for the production of a thermoplastic resin film is provided with an air exhaust mechanism or an air supply mechanism for the purpose of decreasing the degree of dust or removal of sublimates such as oligomers by the ventilation in the tenter oven. In general, the air exhaust mechanism is separated from the air circulation mechanism which transfers the air recovered by suction from the suction ports to the blowing ports and is configured to exhaust the air in the tenter oven to the outside of the tenter oven. The air supply mechanism is configured such that air is supplied from the outside of the tenter oven into the air circulation path before the air recovered by suction from the suction ports is heated, cooled or temperature-maintained by the heat exchanger (see Patent Document 1).

The tenter oven used for the production of a thermoplastic resin film has a problem in that since the temperature in the outside of the tenter oven is lower than the preset temperature in the tenter oven, heat is transferred from the air in the vicinity of the inner wall of the tenter oven to the air in the vicinity of the outer wall through the wall which partitions the inside and outside of the tenter oven so that the temperature of the air in the vicinity of the inner wall of the tenter oven is lowered and the air in the vicinity of the inner wall of the tenter oven whose temperature was lowered is flown up to the vicinity of the ends of the film in the transverse direction of the film. As a result, the film temperature at the both end portions of the film in the transverse direction of the film is lowered so that irregularity in temperature is generated in the transverse direction of the film.

Further, since the air exhaust mechanism is equipped separately from the air circulation mechanism which transfers the air recovered by suction from the suction ports to the blowing ports, an air flow directed to the air exhaust mechanism is generated in the tenter oven in addition to the flow of the air recovered by suction from the suction ports, so that an irregularity in temperature may be generated in the transverse direction of the film. The cause of generation of this irregularity in temperature will now be explained referring to a tenter oven partitioned into a plurality of chambers in the film transport direction and configured such that the setting of the temperature of each chamber can be changed independently.

First, the cause of generation of the irregularity in temperature in cases where the amount of air supply is equal to the amount of air exhaust will now be explained. Since the incoming and outgoing air through the fan is balanced, in the air circulation mechanism, the amount of the air blown from the blowing ports is equal to the total amount of the air recovered by suction from the suction ports and the air supplied from the air supply mechanism. That is, the amount of the air recovered by suction from the suction ports is equal to the amount of the air blown from the blowing ports, from which the amount of the air supplied from the air supply mechanism is subtracted, the air is excess around the blowing ports by the amount of the air supplied from the air supply mechanism. Even if the air in an amount supplied from the supply mechanism is exhausted by the air exhaust mechanism, an air flow directed to the air exhaust mechanism is generated in the tenter oven so that an irregularity in temperature may be generated in the film in the transverse direction of the film.

Further, since, in the tenter oven, the adjacent chambers are not perfectly partitioned, but at least there is an opening between the adjacent chambers for passing the film, a part of the excess air around the blowing ports is flown out to the adjacent chamber. The flow of the air flown out to the adjacent chamber is likely to be generated by the fact that the air blown to the film from the blowing ports flows along the film surface. Further, since the chamber is in the state wherein the air is in short by the amount flown out to the adjacent chamber, air is flown in from the adjacent chamber in order to compensate the air in short. If the air is flown in the film transport direction of the film across the boundary of the chambers, the air in the adjacent chamber having a different preset temperature is mixed with the air blown to the film surface from the blowing ports, so that irregularity in temperature occurs.

Further, in cases where the amount of air exhaust is larger than the amount of air supply in the chamber of the tenter oven, or in cases where exhaustion alone is carried out without supplying air, air is flown in from the adjacent chamber in order to compensate the air in short. In cases where the amount of air supply is larger than the amount of air exhaust in the chamber in the tenter oven, or in cases where air supply alone is carried out without exhaustion, air flows out to the adjacent chamber in order to exhaust the excess air. If the air is flown in the film transport direction of the film across the boundary of the chambers, the air in the adjacent chamber having a different preset temperature is mixed with the air blown to the film surface from the blowing ports, so that irregularity in temperature occurs.

The irregularity in temperature of the thermoplastic resin film in the transverse direction of the film causes irregularity in thickness and irregularity in characteristics, and leads to the deterioration of the quality of the products. Further, the irregularity in temperature of the thermoplastic resin film in the transverse direction of the film may induce breakage of the film in the tenter oven to decrease the productivity.

Further, defects of the film may be formed by sublimation of substances such as oligomers from the film when the thermoplastic resin film is heated, flowing of the sublimates by the air flow in the film transport direction into a chamber having a lower preset temperature from a chamber having a higher preset temperature, deposition of the sublimates due to the temperature decrease, and attaching to the film surface.

### Prior Art Documents

### Patent Document

Against the above-described problem, a number of methods have been proposed to decrease the irregularity in temperature of the thermoplastic resin film in the transverse direction of the film. For example, a method has been proposed wherein the amount of the air blown to the end portions in the transverse direction of the thermoplastic resin film is made larger than the amount of the air blown to the central portion of the film, thereby making the temperature distribution in the transverse direction of the film uniform (see Patent Document 2 and Patent Document 3). Further, a method has been proposed wherein the temperature of the covers covering the running paths of the clips is raised, thereby making the temperature distribution in the transverse direction of the film uniform (see Patent Document 4). A method has been proposed wherein by controlling a distance (L) between the air blowing surface of the air blowing nozzle and the film passing surface being close (150 mm or less), generation of an air flow in the direction of running of the film across the boundaries of the chambers (MD flow) can be suppressed (see Patent Document 5). Further, a method has been proposed wherein by forming a shield plate in a conveyance mechanism for conveying a belt-like object, a flow of heated air can be adjusted and heating efficiency can be improved (see Patent Document 6).
- Patent Document 1: JP 2002-178399 A
- Patent Document 2: JP 5-96619 A
- Patent Document 3: JP 2000-347036 A
- Patent Document 4: JP 2011-73294 A
- Patent Document 5: WO 2012/133152
- Patent Document 6: JP 2013-49183

### Summary of the Invention

### Problems to be Solved by the Invention

However, in the proposals described in the above-mentioned Patent Document 2 and Patent Document 3, it is intended to adjust the irregularity in temperature generated by convection or heat conduction by the heat transfer coefficient distribution intentionally created by the air flow, so that it is necessary to change the air flow distribution every time the conditions are changed. Thus, this method has a problem in that the adjustment of the air flow distribution in order to uniform the temperature distribution in the transverse direction of the film is difficult, and further in that the energy consumption is increased because of the energy needed for the heating because the amount of the air blown to the end portions in the transverse direction of the film is increased. Regarding the proposal in the above-mentioned Patent Document 3, the method has a problem in that the energy used is increased since the temperature of the covers covering the running paths of the clips is raised by a temperature-adjusting apparatus.

By any of the proposals described in the above-mentioned Patent Document 2 to Patent Document 5, flowing out of the air into the adjacent chamber and flowing in of the air from the adjacent chamber cannot be prevented. Further, these methods cannot prevent that the temperature-lowered air in the vicinity of the inner wall of the tenter oven is flown to the vicinity of the film by convection phenomenon, and mixed with the air heated to a prescribed temperature and blown to the film surface from the blowing ports. The paths through which the temperature-lowered air in the vicinity of the inner wall of the tenter oven is flown to the both end portions of the transverse direction of the film include the space between the respective blowing ports and the respective clip rails, the space between the adjacent blowing ports, the space between the respective blowing ports and the partition wall 17 between the chambers, and so on. By the proposal described in the above-mentioned Patent Document 6, when the circulating air comes into contact with the shield plate which is in a cooled state by low temperature air in the vicinity of the inner wall of the tenter oven, since sublimates such as oligomer etc. contained in the circulating air tend to deposit, attaching of such sublimates to the surface of film being conveyed and flowing of the temperature-lowered air in the vicinity of the inner wall of the tenter oven to the both end portions of the transverse direction of the film cannot be prevented.

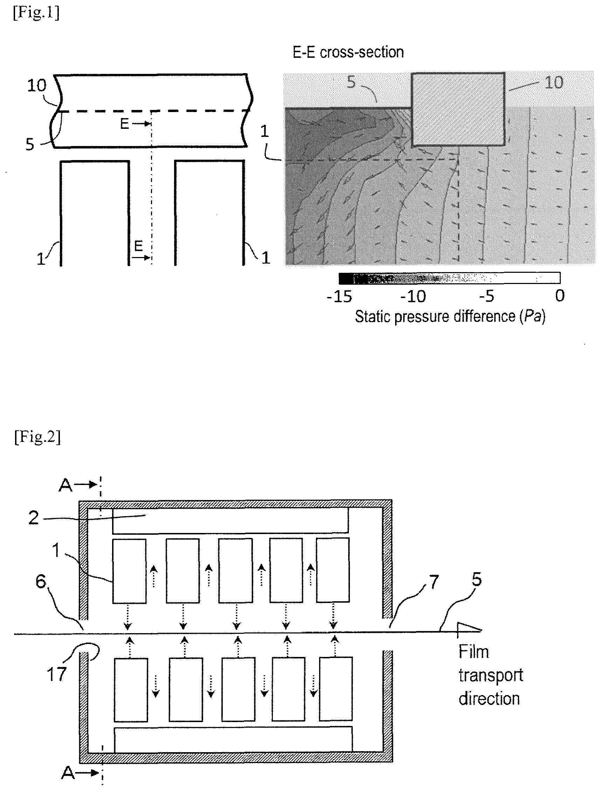

The mechanism of the phenomenon by which the temperature-lowered air in the vicinity of the inner wall of the tenter oven is flown to the both end portions in the transverse direction of the film will now be explained referring to Fig. 1. Fig. 1 shows an example of the results of a three dimensional fluid analysis by a commercially available general purpose thermo-fluid analysis software of a numerical analysis model prepared for a mode of a conventional tenter oven, and shows the wind velocity vector and the static pressure distribution in a cross section perpendicular to the film transport direction between adjacent blowing ports. In the wind velocity vector in Fig. 1, paying attention to the flow in the transverse direction of the film reveals that the air in the vicinity of the inner wall of the tenter oven flows into the space on the side where the film exists relative to the clip rail cover. Paying attention to the flow in the vicinity of the clip rail cover reveals that the air between the adjacent blowing ports is flown to the film. Thus, it can be seen that the air flown from the vicinity of the inner wall of the tenter oven flows to the film.

The mechanism by which the above-described air flow is generated will now be explained. The main air flow generated in the tenter oven by the air circulation mechanism of the air is the flow of the air blown to the film from the blowing ports and then recovered by suction by the suction ports after passing through the region between adjacent blowing ports. The flow rate of this air flow is the largest in the region where the air is blown from the blowing ports, and more and more decreased in the region between the adjacent blowing ports and in the vicinity of the inner wall of the tenter oven, in the order mentioned. It is known that the dynamic pressure is increased and the static pressure is decreased in a region where the flow rate in the space is large, according to bernoulli's principle. Therefore, the static pressure in the tenter oven is the smallest in the region where the air is blown from the blowing ports, and more and more increased in the region between the adjacent blowing ports and in the vicinity of the inner wall of the tenter oven, in the order mentioned. This can be confirmed by the static pressure distribution shown in Fig. 1, and the air in the vicinity of the inner wall of the tenter oven is thought to reach the both end portions in the transverse direction of the film by the mechanism described above.

Because of the above-described phenomenon, there is a problem in that the air whose temperature is lowered in the vicinity of the inner wall of the tenter oven is flown to the vicinity of the both end portions in the transverse direction of the film, so that the sublimated oligomers and the like are deposited and attached to the film surface to generate defects of the film, and that the temperature of the air for heating the film is lowered so that the air cannot heat the film or the irregularity in temperature is generated in the film.

In view of this, an object of the present invention is to provide a tenter oven with which the irregularity in temperature of the thermoplastic resin film can be decreased, the energy consumption needed for heating the film to a prescribed temperature can be decreased, and the defects due to the deposition of oligomers and the like can be decreased.

Another object of the present invention is to provide a method of producing a thermoplastic resin film using the above-described tenter oven. Means for Solving the Problems

To solve the above-described problems, the tenter oven of the present invention has the following constitution: That is, a tenter oven wherein blowing ports which blow air heated to a prescribed temperature and suction ports which recover air in the tenter oven are arranged so as to extend along the transverse direction of the film, the tenter oven comprising clips which grip both end portions of the film in the transverse direction of the film; clip rails which are running paths of the clips; and one or more zones partitioned with walls except for the openings for transporting the film along the film transport direction; wherein the zone is constituted by one or more chambers; the tenter oven further comprising shield plates at a position between one end of the blowing port in the transverse direction of the film and the clip-gripping portion closest thereto, and at a position between the other end of the blowing port in the transverse direction of the film and the clip-gripping portion closest thereto, respectively, the shield plates being within planes substantially perpendicular to the film plane and substantially parallel to the clip rails.

According to a preferred mode of the tenter oven of the present invention, the shield plates comprise a movable mechanism for moving the shield plates in accordance with change of positions of the clip rails.

According to a preferred mode of the present invention, the shield plates comprise a heat insulating material.

According to a preferred mode of tenter oven of the present invention, the tenter oven further comprises an air circulation mechanism which transfers the air recovered by suction through the suction ports to the blowing ports after changing the temperature of the air to a prescribed temperature; and, within a path in which the temperature of the air recovered by suction through the suction ports is changed to the prescribed temperature, an air exhaust mechanism for exhausting air to the outside of the tenter oven, and an air supply mechanism for taking in air from the outside of the tenter oven.

According to a preferred mode of the present invention, the tenter oven comprises a chamber wherein the length of the blowing port in the transverse direction of the film and the length of the suction port in the transverse direction of the film, which are arranged in the chamber, are the same.

To solve the above-described problems, the method of producing a thermoplastic resin film of the present invention has any one of the following constitutions (1) or (2):
(1) A method of producing a thermoplastic resin film using the above-described tenter oven, wherein when the zone is divided into a plurality of spaces by the planes having the shield plates therein, in at least one zone, the amount of the air blown from the blowing ports is equal to the amount of the air recovered by suction from the suction ports in each of the spaces.
(2) A method of producing a thermoplastic resin film using the above-described tenter oven, wherein when the chamber is divided into a plurality of spaces by the planes having the shield plates therein, in at least one chamber, the amount of the air blown from the blowing ports is equal to the amount of the air recovered by suction from the suction ports in each of the spaces.

A preferred mode of the method of producing a thermoplastic resin film of the present invention has both of the above-described constitutions (1) and (2).

### Effects of the Invention

By the tenter oven of the present invention, the temperature decrease of the air for heating the thermoplastic resin film can be reduced by decreasing the flow of the air whose temperature was lowered in the vicinity of the inner wall of the tenter oven to the vicinity of the end portions of the thermoplastic resin film in the transverse direction of the film, or decreasing the heat exchange with the air whose temperature was lowered in the vicinity of the inner wall of the tenter oven. In addition, since the air flow in the transverse direction of the film, the flowing out of the air to the adjacent chamber and the flowing in of the air from adjacent chamber can be decreased, the temperature of the thermoplastic resin film can be raised uniformly in the transverse direction thereof.

Therefore, by using the tenter oven of the present invention, the irregularity in temperature of the thermoplastic resin film in the transverse direction of the film is decreased, and a thermoplastic resin film having a high uniformity of the film characteristics and thickness can be produced, so that the increase in quality of the film and increase in productivity due to the decrease in the film breakage can be attained.

Further, since the temperature decrease of the air circulating in the tenter oven due to mixing of the air whose temperature was lowered in the vicinity of the inner wall of the tenter oven with the air blown out from the blowing ports is reduced, and since the flowing out and flowing in of the air between the adjacent chambers whose temperatures are preset at different temperatures, respectively, can be decreased, the defects due to the deposition of the oligomers and the like can be decreased, and the energy needed for heating the circulating air to the preset temperature of each chamber can be saved.

### Brief Description of the Drawings

Fig. 1 shows an example of the velocity vector and the pressure distribution generated in the region between adjacent blowing ports in a cross section perpendicular to the film transport direction.
Fig. 2 is a cross-sectional view perpendicular to the transverse direction of the film, of a conventional tenter oven.
Fig. 3 is a cross-sectional view taken along the A-A arrows in Fig. 1.
Fig. 4 is a cross-sectional view perpendicular to the transverse direction of the film of the tenter oven according to a first embodiment of the present invention.
Fig. 5 is a cross-sectional view taken along the B-B arrows in Fig. 3.
Fig. 6 is an enlarged perspective view of the part C of the shield plate in Fig. 3.
Fig. 7 is a cross-sectional view perpendicular to the transverse direction of the film of the tenter oven according to a second embodiment of the present invention.
Fig. 8 is a cross-sectional view perpendicular to the transverse direction of the film of the tenter oven according to a third embodiment of the present invention.
Fig. 9 is a plan view showing a mode of the tenter oven apparatus.
Fig. 10 is a cross-sectional view perpendicular to the transverse direction of the film, of a mode of the tenter oven of the present invention.
Fig. 11 is a cross-sectional view taken along the D-D arrows in Fig. 10.
Fig. 12 is a cross-sectional view perpendicular to the transverse direction of the film, of a mode of the tenter oven of the present invention.
Fig. 13 is a graph showing the relationship between the distance from the clip-gripping portion and the measured temperature.
Fig. 14 is a cross-sectional view perpendicular to the transverse direction of the film, of a mode of the tenter oven of the present invention.

### Mode for Carrying out the Invention

Preferred embodiments of the tenter oven of the present invention will now be described referring to the drawings.

The present invention relates to a tenter oven suitably used for the production of thermoplastic resin films. In the tenter oven of the present invention, blowing ports which blow air heated to a prescribed temperature and suction ports which recover air in the tenter oven are arranged so as to extend along the transverse direction of the film, and the tenter oven comprises clips which grip both end portions of the film in the transverse direction of the film; clip rails which are running paths of the clips; and one or more zones partitioned with walls except for the openings for transporting the film along the film transport direction; wherein the zone is constituted by one or more chambers.

The "zone" in the tenter oven herein means a compartment for carrying out a treatment step such as preheating, stretching, heatsetting or cooling, and the zone in each treatment step is generally called a preheating zone, stretching zone, heatsetting zone, cooling zone or the like, respectively.

Although each zone may be constituted by a single chamber, usually, each zone is partitioned into a plurality of chambers from the entrance of the film to the exit of the film (in the film transport direction), and the temperature of each chamber may be able to be independently preset.

The "chamber" in the tenter oven is the minimum unit constituting the tenter oven, and most of them has an air circulation mechanism which recovers the air in the tenter oven by suction from suction ports and transfers the air to blowing ports after heating the air to a prescribed temperature.

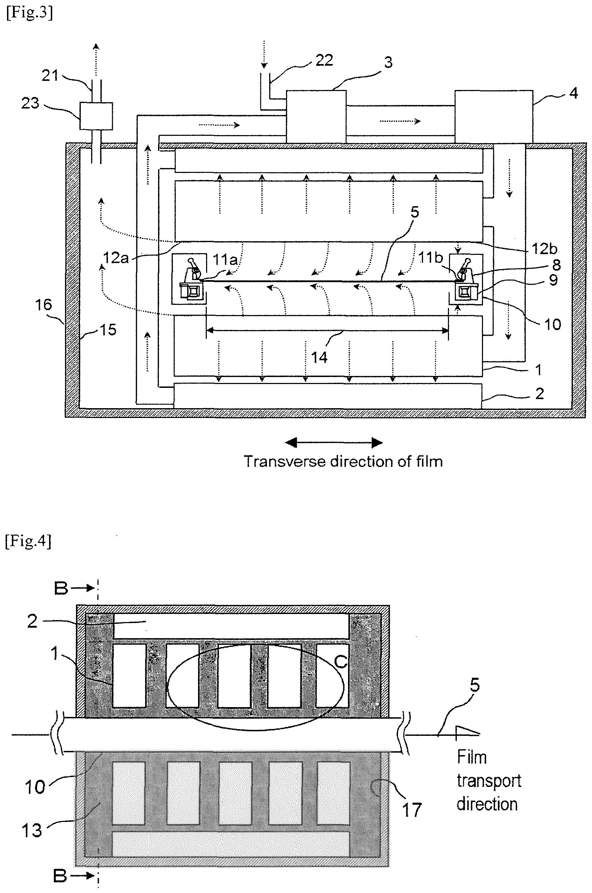

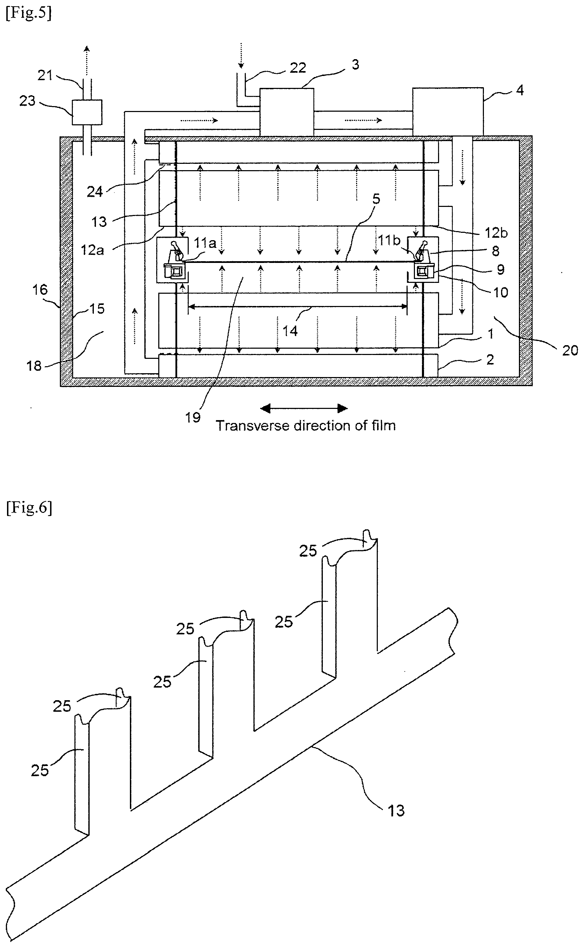

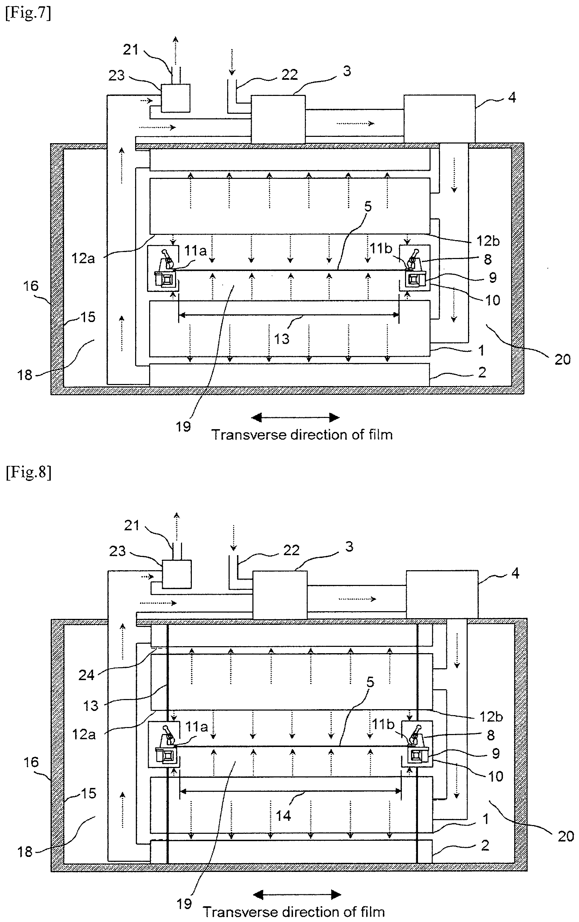

Fig. 2 is a cross-sectional view of a conventional tenter oven. Fig. 3 is a cross-sectional view taken along the A-A arrows in Fig. 2. Fig. 3 is a cross-sectional view of the tenter oven according to a first embodiment of the present invention. Fig. 5 is a cross-sectional view taken along the B-B arrows in Fig. 4. Fig. 6 is an enlarged perspective view of the part C of the shield plate in Fig. 4. Fig. 7 is a cross-sectional view of the tenter oven according to a second embodiment of the present invention. Fig. 8 is a cross-sectional view of the film of the tenter oven according to a third embodiment of the present invention.

As shown in Fig. 2, a plurality of blowing ports 1 are arranged from a zone entrance 6 to a zone exit 7 (in the film transport direction). A film 5 is transported from the zone entrance 6 to the zone exit 7, and the film 5 is heated or cooled with the air blown from the blowing ports 1.

As shown in Fig. 3, the tenter oven has suction ports 2 above the blowing ports 1 arranged above the film and below the blowing ports 1 arranged below the film. The tenter oven has an air circulation mechanism wherein the air in the tenter oven is recovered by suction by the suction ports 2, heated to a preset temperature by a heat exchanger 3, and blown again from the blowing ports 1 by a circulation fan 4. The positions at which the suction ports 2 are arranged are not restricted to those described above as long as they are arranged at both above and below the film so as to extend along the transverse direction of the film.

Further, as shown in Fig. 3, at the both end portions in the transverse direction of the film 5, clips 8 for gripping the film 5, clip rails 9 which are running paths of the clips, and clip rail covers 10 which protect them are arranged.

In some cases, as shown in Fig. 3, an air exhaust mechanism 21 and an air supply mechanism 22 are provided in the tenter oven in order to decrease the degree of dust and to remove the sublimates such as oligomers by ventilation in the tenter oven. The air exhaust mechanism 21 is separated from the air circulation mechanism which transfers the air recovered by suction from the suction ports 2 to the blowing ports 1, and configured to exhaust the air in the tenter oven to the outside of the tenter oven. The air supply mechanism 22 is usually configured to supply air from the outside of the tenter oven to the air circulation path before the air recovered by suction from the suction ports 2 is heated by a heat exchanger 3.

The irregularity in temperature of the film 5 in the transverse direction of the film causes irregularity in thickness or irregularity in characteristics to deteriorate the quality of the product. The irregularity in temperature of the film 5 in the transverse direction of the film may also induce breakage of film in the tenter oven to decrease the productivity.

A first embodiment of the tenter oven of the present invention will now be described referring to the drawings.

Since the temperature in the outside of the tenter oven is lower than that in the tenter oven, heat transfer occurs between the air in the vicinity of the inner wall 15 of the tenter oven and the air in the vicinity of the outer wall 16 of the tenter oven through a wall which partitions the inside and outside of the tenter oven, so that the temperature in the vicinity of the inner wall 15 of the tenter oven is lowered. As a result, the air whose temperature was lowered in the vicinity of the inner wall 15 of the tenter oven flows to the vicinity of the film by the convection phenomenon, and is mixed with the air heated to a prescribed temperature and blown to the film surface from the blowing ports. Since this cannot be prevented, irregularity in temperature is generated due to the temperature decrease of the air for heating. The paths through which the air whose temperature was lowered in the vicinity of the inner wall of the tenter oven flows to the blowing ports 1 also exist between the respective blowing ports 1 and the respective clip rails 9, between the adjacent blowing ports 1, and between the respective blowing ports 1 and the partition wall 17.

The irregularity in temperature of the film 5 in the transverse direction of the film causes irregularity in thickness or irregularity in characteristics to deteriorate the quality of the product. The irregularity in temperature of the film 5 in the transverse direction of the film may also induce breakage of film in the tenter oven to decrease the productivity. Further, since the temperature of the air recovered by suction from the suction ports 2 is lowered due to the mixing of the air whose temperature was lowered in the vicinity of the inner wall 15 of the tenter oven with the air to be blown from the blowing ports 1, the energy for heating the air again to a prescribed temperature is increased. Further, defects of the film may be formed by the fact that the sublimates such as the oligomers and the like generated when the film 5 is heated are deposited by being cooled by the air whose temperature was lowered in the vicinity of the inner wall 15 of the tenter oven, and the deposited materials attach to the surface of the film 5.

In view of this, as a method of decreasing the irregularity in temperature of the film 5 in the transverse direction of the film, according to the first embodiment of the present invention, as shown in Figs. 4 and 5, shield plates 13 are placed at a position between one end 12a of the respective blowing ports in the transverse direction of the film and the clip-gripping portion 11a closest thereto, and at a position between the other end 12b of the respective blowing ports in the transverse direction of the film and the clip-gripping portion 11b closest thereto, respectively, which shield plates 13 are within planes substantially perpendicular to the film plane and substantially parallel to the clip rails 9. The "planes substantially parallel to the clip rails 9" herein means planes substantially parallel to the running direction of the clip rails 9. The shield plates 13 and the film plane are not necessarily exactly perpendicular, and the shield plates 13 may be inclined by an angle of, for example, within +/- 5° from the plane perpendicular to the film plane, or may be inclined by the angle around this angle as long as the effects of the invention are attained. The shield plates 13 and the clip rails 9 may not necessarily be exactly parallel to each other, and the shield plates 13 may be inclined by an angle of, for example, within +/-5° relative to the running direction of the clip rails 9, or may be inclined by the angle around this angle as long as the effects of the invention are attained.

By placing the shield plates 13, the mixing of the cold air in the vicinity of the inner wall 15 of the tenter oven with the air to be blown from the blowing ports 1 is prevented and the temperature decrease of the air blown from the blowing ports 1 is reduced, so that the irregularity in temperature of the film 5 can be decreased. In addition, the energy needed for heating the circulating air to the preset temperature of each chamber can be saved, and the defects of the film due to the deposition of the oligomers and the like can be decreased.

It is preferred to also shield by the shield plates 13 the regions between the respective blowing ports 1 and the respective clip rail covers 10, between the adjacent blowing ports 1, and between the respective blowing ports 1 and the partition wall 17 between zones. In cases where the partition wall 17 exists between chambers, it is preferred also to shield the region between the respective blowing ports 1 and the partition wall 17 between the chambers.

In case of placing the shield plates 13, to assure the ease of maintenance and cleaning, it is preferred to place the shield plates 13 in an easily removable manner such as by fixing the shield plates 13 with bolts.

It is preferred that the shield plates have a movable mechanism which makes the shield plates movable in response to the change of positions of the clip rails. There are cases where the distance 14 between the clip rails are changed in response to the change of the product width of the film 5. Therefore, it is preferred to make the shield plates 13 movable in response to the change of the distance 14 between the clip rails. In this case, in order that the shield plates 13 do not contact the blowing ports 1, the suction ports 2, and the inner wall 15 of the tenter oven, it is preferred to make a clearance of 1 mm or more between the respective shield plates 13 and the respective blowing ports 1, the respective suction ports 2 and the inner wall 15 of the tenter oven, respectively. If the clearance is too large, air flows are generated in the clearances with the shield plates 13, each clearance is preferably 3 mm or less. In cases where the folding angle of the clip rails 9 is changed corresponding to the stretching ratio or the stretching pattern, since the clip rails 9 move in the film transport direction, it is preferred that the shield plates 13 have a mechanism by which the shield plates 13 can be moved in the film transport direction relative to the clip rail covers 10.

Further, to make the air leakage from the clearances between the respective shield plates 13 and the respective blowing ports 1, the respective suction ports 2 and the inner wall 15 of the tenter oven, respectively, it is preferred to use shield plates 13 in the form of a bracket wherein the end portions are folded as shown in Fig. 6, thereby increasing the resistance when the air passes the clearances.

If the circulating air contacts the shield plates 13 when the shield plates 13 are cooled by the cold air in the vicinity of the inner wall 15 of the tenter oven in the transverse direction of the film, sublimates such as oligomers and the like contained in the circulating air may be deposited and attached to the film 5 during transportation, which may lead to the formation of the defects of the film. In view of this, it is preferred that a heat insulating material be used as at least a part of the shield plates 13 in order that at least the surfaces of the shield plates 13 facing the film are not cooled by the heat conduction with the cold air in the vicinity of the inner wall 15 of the tenter oven in the transverse direction of the film. As the heat insulating material used, a material such as glass wool or rock wool whose heatproof temperature is not lower than 240°C, and the heat transmission coefficient of the shield plates 13 is preferably not more than 2.0 W/m²·K.

In the method of production using the tenter oven of the present invention, when the zone is divided into a plurality of spaces by the planes having the shield plates 13 therein, it is preferred to, in at least one zone, make the amount of the air blown from the blowing ports 13 equal to the amount of the air recovered by suction from the suction ports 2 in each of the spaces. Similarly, in the method of production using the tenter oven of the present invention, when the chamber is divided into a plurality of spaces by the planes having the shield plates 13 therein, in at least one chamber, it is preferred to make the amount of the air blown from the blowing ports 1 equal to the amount of the air recovered by suction from the suction ports 2 in each of the spaces. Details of these will now be described referring to the drawings.

That is, as shown in Fig. 5, in each of the spaces A to C (18 to 20) when a zone or a chamber is divided into 3 spaces in the transverse direction of the film by the planes having the shield plates 13 therein, respectively, by making the amount of the air blown from the blowing ports 1 equal to the amount of the air to be sucked from the suction ports 2, there is no excess and shortage of the air in each of the spaces A to C (18 to 20). As a consequence, the transfer of the air between space A (18) and space B (19), and between space B (19) and space C (20) is decreased, so that the irregularity in temperature in the transverse direction of the film can be decreased. Therefore, when the zone or the chamber is divided into a plurality of spaces in the transverse direction of the film by the planes having the shield plates 13 therein, respectively, it is preferred that the amount of the air blown from the blowing ports 1 be equal to the amount of the air recovered by suction from the suction ports 2 in each of the spaces.

Next, a second embodiment of the tenter oven of the present invention will now be explained referring to the drawings.

In a conventional tenter oven, as shown in Fig. 3, since an air exhaust mechanism 21 is provided separately from the air circulation mechanism which transfers the air recovered by suction from the suction ports 2 to the blowing ports 1, in addition to the flow of the air recovered by suction from the suction ports 2, an air flow directed to the air exhaust mechanism 21 is generated in the tenter oven, so that irregularity in temperature in the transverse direction of the film may be generated. The cause of the generation of this irregularity in temperature will now be explained taking a tenter oven partitioned into a plurality of chambers in the film transport direction and configured to change the preset temperatures of the chambers independently, as an example.

First, the cause of generation of the irregularity in temperature when the amount of air supply and the amount of air exhaust are equal is explained. Since the amount of the air sucked and blown out by a fan are the same, in the air circulation mechanism, the amount of the air blown from the blowing ports 1 is equal to the sum of the amounts of the air recovered by suction from the suction port 2 and the air supplied by the air supply mechanism 22. Thus, around the blowing ports 1, the air is excess by the amount of the air supplied from the air supply mechanism 22. The tenter oven is not perfectly partitioned by the walls between the chambers, and there is at least the openings for passing the film 5, so that a part of the excess air around the blowing ports 1 flows out to the adjacent chamber. The flow of the air flowing out to the adjacent chamber is likely to be generated by the fact that the air blown to the film 5 from the blowing ports 1 flows along the film surface. In the chamber, the air is in short by the amount of the air flown out to the adjacent chamber, so that an air flow from the adjacent chamber is generated in order to compensate the air in short. If air flows in the film transport direction across the boundary of the chambers, the air in the adjacent chamber whose preset temperature is different is mixed with the air blown to the film surface from the blowing ports 1, so that irregularity in temperature is generated in the film 5.

In cases where the amount of air exhaust is larger than the amount of air supply in the tenter oven, or where the air exhaust alone is carried out without supplying air, air flows in from the adjacent chamber in order to compensate the air in short in the chamber. In cases where the amount of air supply is larger than the amount of air exhaust in the chamber of the tenter oven, or where air supply alone is carried out without exhausting, flowing out of the air to the adjacent chamber occurs in order to exhaust the excess air in the chamber. If air flows in the film transport direction across the boundary of the chambers, the air in the adjacent chamber whose preset temperature is different is mixed with the air blown to the film surface from the blowing ports 1, so that irregularity in temperature is generated in the film 5.

By the generation of the air flow in the film transport direction, the cold air in the adjacent chamber is mixed with the air blown from the blowing ports 1, and the temperature of the air recovered by suction from the suction ports 2 is lowered, so that the energy for heating the air again to the prescribed temperature is increased. Further, the sublimates such as oligomers generated when the film 5 is heated are transported by the air flow in the film transport direction from a chamber having a higher preset temperature to a chamber having a lower preset temperature, and are cooled to deposit. The deposits may be attached to the surface of the film 5 to form defects of the film.

In view of this, as a method for decreasing the irregularity in temperature of the film 5 in the transverse direction of the film, according to a second embodiment of the tenter oven of the present invention, as shown in Fig. 7, the tenter oven has an air circulation mechanism which transfers the air recovered by suction from the suction ports 2 to the blowing ports 1 after changing again the temperature of the air to the prescribed temperature, and an air exhaust mechanism 21 for exhausting the air to the outside of the tenter oven and an air supply mechanism 22 for taking in air from the outside of the tenter oven are provided within the path before the temperature of the air recovered by suction from the suction port 2 is changed to the prescribed temperature. Further in the method of producing a thermoplastic resin film using this tenter oven, it is preferred to make the amount of the air exhausted from the air exhaust mechanism 21 equal to the amount of the air supplied from the air supply mechanism 22. By this, even if the ventilation in the tenter oven is carried out using the air exhaust mechanism 21 and the air supply mechanism 22, the amount of the air supplied from the blowing ports 1 and the amount of the air exhausted from the suction ports 2 are the same in the tenter oven, and the air flow in the film transport direction and in the transverse direction of the film can be decreased, so that the irregularity in temperature of the film 5 can be decreased. Further, the energy needed to heat the circulating air to the preset temperature of each chamber can be saved, and the defects of the film 5 due to the deposition of the oligomers and the like can be decreased.

A third embodiment of the tenter oven of the present invention will now be explained referring to the drawings.

This embodiment comprises the shield plates as in the tenter oven according to the first embodiment, and comprises the ventilation mechanism as in the tenter oven according to the second embodiment, that is, the air exhaust mechanism 21 and the air supply mechanism 22.

In the method of producing a thermoplastic resin film using this tenter oven too, it is preferred to make the amount of the exhaust from the air exhaust mechanism 21 equal to the amount of air supply from the air supply mechanism 22 from the view point of preventing the air from flowing out to the adjacent chamber and from flowing in from the adjacent chamber. In this case too, in each of the spaces A to C (18 to 20) divided by the planes having therein the shield plates 13, respectively, it is preferred to make the amount of the air blown from the blowing ports 1 equal to the amount of the air recovered by suction from the suction ports 2 and from the air exhaust portion 23. Specifically, as shown in Fig. 5, in cases where an air exhaust mechanism 21 and an air supply mechanism 22 are arranged, it is preferred to adjust the suction flow resistance of the suction ports 2 in the space A (18) such that the amount of the air recovered by suction from the suction ports 2 is smaller by the amount of the air recovered by suction from the air exhaust portion 23 in the space A (18). Specific means for adjusting the suction flow resistance include a method wherein the opening areas of the openings of the respective suction ports 2 in the space A (18) are made smaller than the opening areas of the openings of the respective suction ports 2 in the space B (19) and space C (20); and a method wherein plates shielding the openings of the suction ports 2 in the space A (18) are placed. In the mode wherein the shield plates 13 are moved in response to the change of position of the clip rails 9, it is preferred to arrange an adjustment of suction flow resistance 24 having the above-described means for adjustment at the suction ports 2 in the space A (18). The above-described configuration is not restricted to the cases where the tenter oven has the constitution shown in Fig. 5, but can also be attained in the same way even when the air exhaust mechanism 21 and the air supply mechanism 22 are arranged in any of space A to C (18 to 20).

In the tenter oven of the present invention, it is preferred that the tenter oven have a chamber in which the length of the blowing ports 1 in the transverse direction of the film and the length of the suction ports 2 in the transverse direction of the film are the same. More specifically, to decrease the air flowing in the transverse direction of the film until the air blown from the blowing ports 1 is recovered by suction from the suction ports 2, it is preferred that, in each of the chambers, the length of the blowing ports 1 and the length of the suction ports 2 in the transverse direction of the film be the same, and that the positions of the blowing ports 1 and the suction ports 2 in the transverse direction of the film be the same.

In general, in the production of a thermoplastic resin film, an unoriented film is obtained by extruding a thermoplastic resin from a die onto a cooling drum, and then the obtained unoriented film is stretched in the film transport direction, as required, to obtain a monoaxially oriented. Methods of obtaining a biaxially oriented thermoplastic resin film by stretching the unoriented film simultaneously in the film transport direction and in the transverse direction of the film in the tenter oven (simultaneous biaxial stretching method) or by stretching the monoaxially oriented film in the transverse direction of the film in the tenter oven (sequential biaxial stretching) are widely conducted.

As the tenter oven used in such a production process, the tenter oven of the present invention can be used. Thus, the method of producing a thermoplastic resin film according to the present invention is characterized in that the unoriented film or the monoaxially oriented obtained by extruding a thermoplastic resin onto a cooling drum from a die is introduced into the tenter oven of the present invention and treated.

By using such a method of producing a thermoplastic resin film and the production apparatus (tenter oven) of the present invention, the obtained thermoplastic resin film has an improved uniformity in the characteristics and thickness in the transverse direction, the energy consumption needed to heat the thermoplastic resin film to the prescribed temperature can be saved, and the defects of the film due to the deposits such as oligomers can be decreased, so that the method is a preferred production method.

By the method of producing the thermoplastic resin film and the production apparatus (tenter oven) of the present invention, improve in the quality of the film, stabilization of the steps and saving of the energy consumption may be attained. Examples

The present invention will now be described concretely by way of Examples thereof. It should be noted that the present invention is not restricted to the Examples.

### (Example 1: First Embodiment)

After vacuum drying pellets of polyethylene terephthalate resin, the pellets were melted in an extruder and extruded from a die onto a cooling drum to obtain an unoriented film. The obtained unoriented film was heated with a group of heated rolls and with an infrared heater, and then stretched in the running direction at a stretching ratio of 3.2 times the original length with group of rolls having a circumferential velocity difference to obtain a monoaxially oriented.

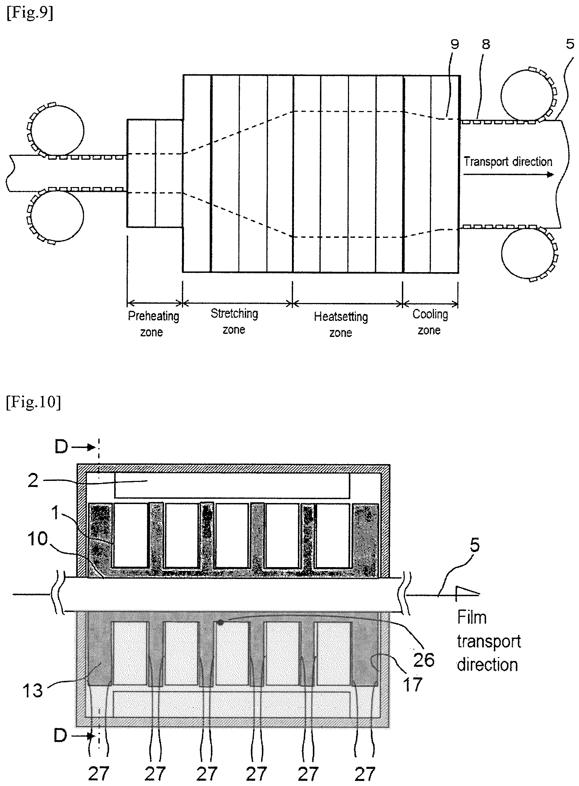

The obtained monoaxially oriented film was introduced into a tenter oven, and a film having a width of 1100 mm was stretched at a stretching ratio of 3.5 times the original length to obtain a biaxially oriented film. The tenter oven was constituted by a preheating zone, a stretching zone, a heatsetting zone and a cooling zone as shown in Fig. 9. Each zone was constituted by a plurality of chambers, that is, the preheating zone was constituted by 2 chambers, the stretching zone was constituted by 4 chambers, the heatsetting zone was constituted by 4 chambers and the cooling zone was constituted by 2 chambers. The chambers in each zone had a height of 3 m and a length in the film transport direction of 3 m.

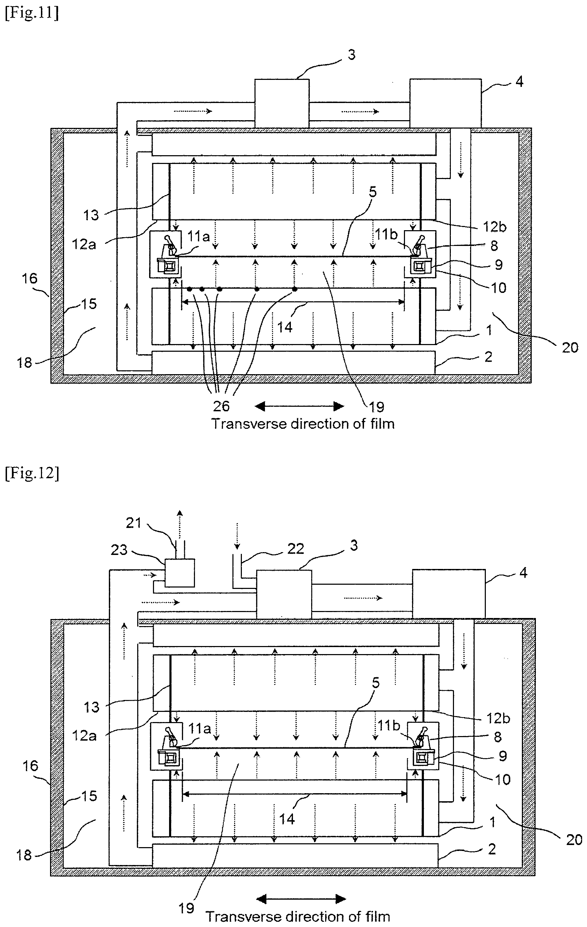

In each chamber, as shown in Fig. 11, air is blown to the film from the blowing ports 1, recovered by suction by the suction ports 2, heated by the heat exchanger 3, and circulated again to the blowing ports 1. The temperature of the air blown to the film was preset in each zone, and the preset temperature in the preheating zone was 100°C, that in the stretching zone was 130°C, that in the first chamber in the heatsetting zone counted from the film transport direction was 200°C, that in the other chambers in the heatsetting zone was 220°C, and that in the cooling zone was 100°C. Regarding the flow rate of the blown air in each zone, the flow rate of the blown air in the preheating zone was 25m/s, that in the stretching zone was 18m/s, that in the heatsetting zone was 18m/s, and that in the cooling zone was 12m/s. The transport velocity of the film was set to 25m/min.

In each chamber, as shown in Fig. 10, five blowing ports 1 were arranged in the film transport direction in each of the regions above and below the film plane, respectively. Regarding the shield plates, as shown in Fig. 10 and Fig. 11, shield plates 13 were placed above and below the clip rail covers 10. The shield plates 13 were made of stainless steel with a thickness of 2 mm, and fixed to the clip rail covers 10 with bolts. The each clearances between the respective shield plates 13 and the respective blowing ports 1, between the respective shield plates 13 and the respective suction ports 2, and between the respective shield plates 13 and the inner wall 15 of the tenter oven were 3 mm, respectively. The end portion of each shield plate 13 was folded by 40 mm as shown in Fig. 6 at the folding position 27 shown in Fig. 10 to form a folded portion 25.

In the second chamber counted from the film transport direction in the heatsetting zone, the air temperature was measured at the five measuring points 26 along the transverse direction. The positions of the measuring points 26 were located, as shown in Fig. 10 and Fig. 11, in the width of 3800 mm between the clip-gripping portions 11a and 11b, at 50 mm, 400 mm, 700 mm, 1300 mm and 1900 mm, respectively, from the clip-gripping portions 11a.

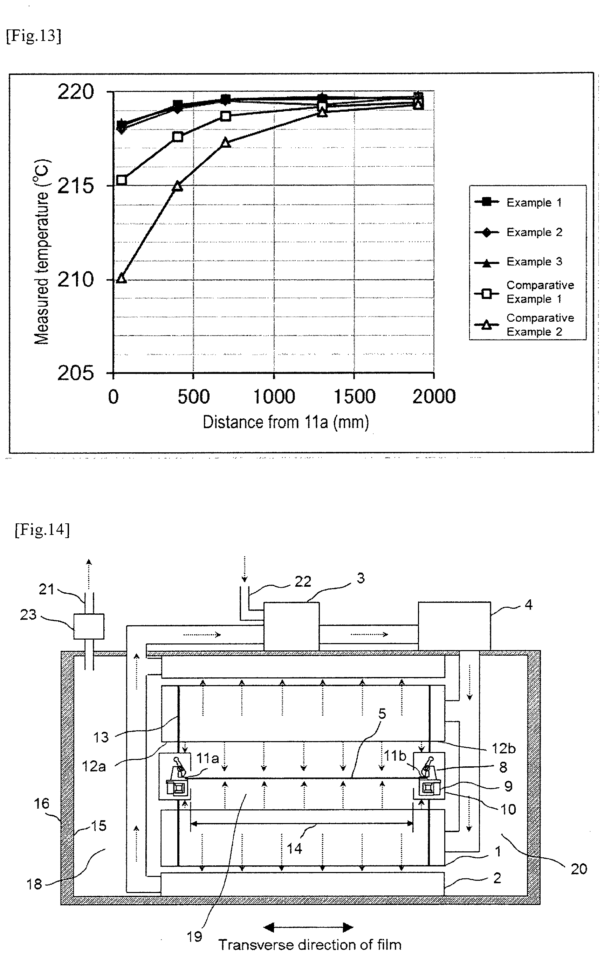

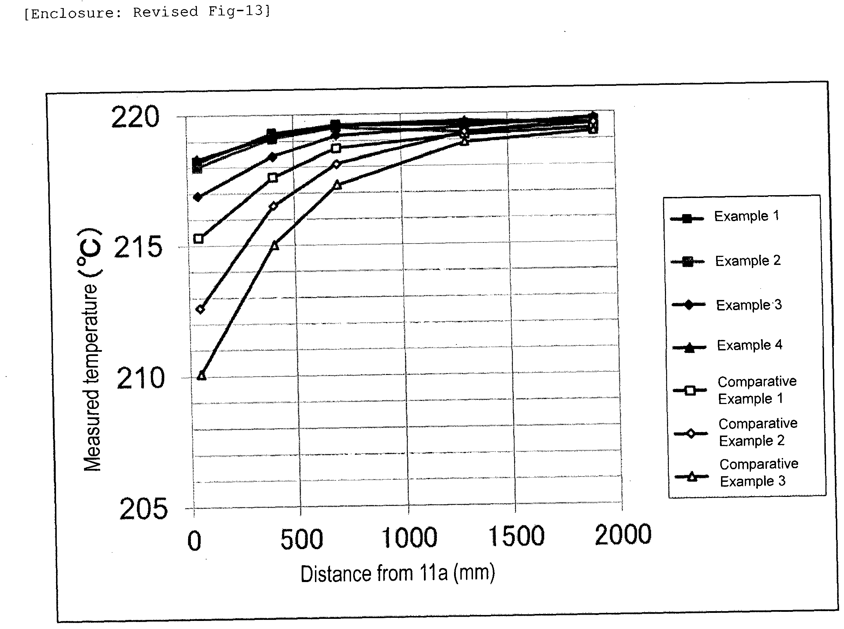

The results of the measurement under the above-described conditions are shown in Table 1 and Fig. 13. The difference in temperature in the transverse direction of the film was 1.5°C. The difference in temperature herein means the difference between the highest and lowest temperatures measured at the measuring points 26.

After placing the shield plates 13 and subsequent running for about 1 month, the surfaces of the shield plates 13 at the side of the film were observed. As a result, deposition of the sublimates of oligomers and the like was slightly observed.

**[Table 1]**

| Distance from 11a (mm) | Measured temperature (°C) | | | | | | |
|---|---|---|---|---|---|---|---|
| | Example 1 | Example 2 | Example 3 | Example 4 | Comparative Example 1 | Comparative Example 2 | Comparative Example 3 |
| 50 | 218.2 | 218.0 | 216.9 | 218.3 | 215.3 | 212.6 | 210.1 |
| 400 | 219.3 | 219.1 | 218.4 | 219.2 | 217.6 | 216.5 | 215.0 |
| 700 | 219.6 | 219.5 | 219.2 | 219.6 | 218.7 | 218.1 | 217.3 |
| 1,300 | 219.6 | 219.3 | 219.5 | 219.7 | 219.2 | 219.3 | 218.9 |
| 1,900 | 219.7 | 219.7 | 219.8 | 219.6 | 219.4 | 219.6 | 219.3 |

### Example 2: First Embodiment

The shield plates 13 were changed to the shield plates composed of a heat insulating material (material: calcium silicate, heat transmission coefficient: 2.0 W/m²·K) with a thickness of 36 mm sandwiched between stainless steel plates with a thickness of 2 mm. In addition, the shield plates 13 were changed to those which did not have the folded portions 25 shown in Fig. 6. Except for these points, the conditions were the same as in Example 1. The results of the measurements at the measuring points 26 are shown in Table 1 and Fig. 13. As shown, the difference in temperature in the transverse direction of the film was 1.7°C.

After running for about 1 month, the surfaces of the shield plates 13 at the side of the film were observed. As a result, the attachment of the deposits of the sublimates such as oligomers were scarcely observed by visual observation.

### (Example 3: Second Embodiment)

Each chamber in each zone had the air circulation path as shown in Fig. 7. That is, the tenter oven had a configuration wherein a part of the air recovered by suction from the suction ports 2 is exhausted to the outside from the air exhaust mechanism 21 using the air exhaust portion 23, and the remaining air and the air taken in from the outside through the air supply mechanism 22 were blown from the blowing ports 1 using the circulation fan 4.

In the heatsetting zone, the amount of the air exhausted from the air exhaust mechanism 21 to the outside was set to 24 m³_{(N)}/min, the amount of the air taken in from the outside through the air supply mechanism 22 was set to 24 m³_{(N)}/min, and the amount of the air blown from the blowing ports 1 using the circulation fan 4 was set to 240 m³_{(N)}/min. The term "m³_{(N)}/min" means normal m³/min (the same hereinafter).

The same operations as in Example 1 were repeated except that the air circulation path was changed and the shield plates 13 were not provided. The results of the measurements are shown in Table 1 and Fig. 13. The difference in temperature in the transverse direction of the film was 2.9°C.

### (Example 4: Third Embodiment)

Each chamber in the heatsetting zone had the air circulation path as shown in Fig. 12. That is, a configuration was employed wherein in the path for heating the air recovered by suction from the suction ports 2 is heated to the prescribed temperature, a part of the air is exhausted to the outside through an air exhaust mechanism 21, and the air in an amount of the air exhausted to the outside is taken in through an air supply mechanism 22 and merged with the air not exhausted to the outside. The amount of the air exhausted to and supplied from the outside were set as in Example 3. Further, shield plates 13 were placed in the regions above and below the clip rail covers 10 in the same manner as in Example 1 and as shown in Fig. 10 and Fig. 12. The same operations as in Example 1 were repeated except that the air circulation path was changed.

The results of the measurements at each measuring point are shown in Table 1 and Fig. 13. The results of the measurements at the measuring points 26 are shown in Table 1 and Fig. 13. As shown, the difference in temperature in the transverse direction of the film was 1.3°C.

After running for about 1 month, the surfaces of the shield plates 13 at the side of the film were observed. As a result, the attachment of the deposits of the sublimates such as oligomers were slightly observed.

### (Comparative Example 1: Comparative Example of First Embodiment)

The same operations as in Example 1 were repeated except that the shield plates were not placed. The results of the measurements at the measuring points 26 are shown in Table 1 and Fig. 13. The difference in temperature in the transverse direction of the film was 4.1°C.

### (Comparative Example 2: Comparative Example of Second Embodiment)

The shield plates 13 were not placed and the air circulation path as shown in Fig. 3 was provided in each chamber in the heatsetting zone. That is, the air exhaust mechanism 21 was provided so that air is sucked thereby. A configuration in the heatsetting zone wherein a part of the air recovered by suction from the suction ports 2 and the air taken in from the outside through the air supply mechanism 22 were blown from the blowing ports 1 using the circulation fan 4, and a configuration wherein the air in each chamber is exhausted to the outside from the air exhaust mechanism 21 using the air exhaust portion 23, were employed. The amount of the air exhausted from the air exhaust mechanism 21 to the outside was set to 24 m³_{(N)}/min, the amount of the air taken in from the outside through the air supply mechanism 22 was set to 24 m³_{(N)}/min, and the amount of the air blown from the blowing ports 1 using the circulation fan 4 was set to 240 m³_{(N)}/min. The same operations as in Example 1 were repeated except that the shield plates 13 were not placed and the configurations were changed as described above. The results are shown in Table 1 and Fig. 13, and the difference in temperature was 7.0°C.

### (Comparative Example 3: Comparative Example of Third Embodiment)

Shield plates 13 were placed in the regions above and below the clip rail covers 10 in the same manner as in Example 1 and as shown in Fig. 10 and Fig. 14. Further, the air circulation path as in Comparative Example 2 was employed. That is, as shown in Fig. 14, the air exhaust mechanism 21 was provided so that air is sucked thereby. The same operations as in Comparative Example 2 were repeated except that the air circulation path was changed. The results are shown in Table 1 and Fig. 13, and the difference in temperature was 9.2°C.

After running for about 1 month, the surfaces of the shield plates 13 at the side of the film were observed. As a result, the attachment of the deposits of the sublimates such as oligomers were slightly observed.

### Description of Symbols

- 1 :: blowing ports
- 2 :: suction ports
- 3 :: heat exchanger
- 4 :: circulation fan
- 5 :: film
- 6 :: zone entrance
- 7 :: zone exit
- 8 :: clips
- 9 :: clip rails
- 10 :: clip rail covers
- 11a, 11b :: clip-gripping portions
- 12a, 12b :: end portions of blowing ports in the transverse direction of the film
- 13 :: shield plates
- 14 :: distance between clip rails
- 15 :: tenter oven inner wall
- 16 :: tenter oven outer wall
- 17 :: partition wall between zones and/or chambers
- 18 :: space A
- 19 :: space B
- 20 :: space C
- 21 :: air exhaust mechanism
- 22 :: air supply mechanism
- 23 :: air exhaust portion
- 24 :: adjustment of suction flow resistance
- 25 :: folded portion
- 26 :: measuring points
- 27 :: folding position

## Claims

1. A tenter oven wherein blowing ports (1) which blow air heated to a prescribed temperature and suction ports (2) which recover air in said tenter oven are arranged so as to extend along the transverse direction of the film (5), said tenter oven comprising clips (8) which grip both end portions of the film (5) in the transverse direction of the film (5); clip rails (9) which are running paths of said clips (8); and one or more zones partitioned with walls (17) except for the openings for transporting the film (5) along the film transport direction; wherein said zone is constituted by one or more chambers; said tenter oven further comprising shield plates (13) at a position between one end (12a, 12b) of said blowing port (1) in the transverse direction of the film (5) and the clip-gripping portion (11a, 11b) closest thereto, and at a position between the other end (12a, 12b) of said blowing port (1) in the transverse direction of the film and the clip-gripping portion (11a, 11b) closest thereto, respectively, said shield plates (13) being within planes substantially perpendicular to the film plane and substantially parallel to said clip rails (9).

2. The tenter oven according to claim 1, wherein said shield plates (13) comprise a movable mechanism for moving said shield plates (13) in accordance with change of positions of said clip rails (9).

3. The tenter oven according to claim 1 or 2, wherein said shield plates (13) comprise a heat insulating material.

4. The tenter oven according to any one of claims 1 to 3, further comprising an air circulation mechanism which transfers the air recovered by suction through said suction ports (2) to said blowing ports (1) after changing the temperature of said air to a prescribed temperature; and, within a path in which the temperature of said air recovered by suction through said suction ports (2) is changed to the prescribed temperature, an air exhaust mechanism (21) for exhausting air to the outside of said tenter oven, and an air supply mechanism (22) for taking in air from the outside of said tenter oven.

5. The tenter oven according to any one of claims 1 to 4, comprising a chamber wherein the length of the blowing port (1) in the transverse direction of the film (5) and the length of the suction port (1) in the transverse direction of the film (5), which are arranged in said chamber, are the same.

6. A method of producing a thermoplastic resin film using said tenter oven according to any one of claims 1 to 5, wherein when said zone is divided into a plurality of spaces by the planes having said shield plates (13) therein, in at least one zone, the amount of the air blown from said blowing ports (1) is equal to the amount of the air recovered by suction from said suction ports (2) in each of said spaces.

7. A method of producing a thermoplastic resin film using said tenter oven according to any one of claims 1 to 5, wherein when said chamber is divided into a plurality of spaces by the planes having said shield plates (13) therein, in at least one chamber, the amount of the air blown from said blowing ports (1) is equal to the amount of the air recovered by suction from said suction ports (2) in each of said spaces.

## Patentansprüche

1. Spannofen, wobei Blasöffnungen (1), die Luft einblasen, die auf eine vorgeschriebene Temperatur erwärmt ist, und Saugöffnungen (2), die Luft in dem Spannofen zurückgewinnen, so angeordnet sind, dass sie sich entlang der Querrichtung der Folie (5) erstrecken, wobei der Spannofen Klammern (8) umfasst, die beide Endabschnitte der Folie (5) in der Querrichtung der Folie (5) greifen; wobei der Spannofen Clipschienen (9) umfasst, die Laufwege von den Klammern (8) sind; und wobei der Spannofen eine oder mehrere Zonen umfasst, die mit Wänden (17) unterteilt sind, mit Ausnahme der Öffnungen für das Transportieren der Folie (5) entlang der Filmtransportrichtung; wobei die Zone aus einer oder mehreren Kammern gebildet ist; wobei der Spannofen ferner Abschirmplatten (13) an einer Position zwischen einem Ende (12a, 12b) der Blasöffnung (1) in der Querrichtung der Folie (5) und des ihr am nächsten liegenden Klammergreifabschnitts (11a, 11b) beziehungsweise an einer Position zwischen dem anderen Ende (12a, 12b) der Blasöffnung (1) in der Querrichtung der Folie und des ihr am nächsten liegenden Klammergreifabschnitts (11a, 11b) umfasst, wobei die Abschirmplatten (13) in Ebenen liegen, die im Wesentlichen senkrecht zu der Folienebene und im Wesentlichen parallel zu den Klammerschienen (9) verlaufen.

2. Spannofen nach Anspruch 1, wobei die Abschirmplatten (13) einen beweglichen Mechanismus zum Bewegen der Abschirmplatten (13) in Übereinstimmung mit Positionsveränderungen der Klammerschienen (9) umfassen.

3. Spannofen nach Anspruch 1 oder 2, wobei die Abschirmplatten (13) ein wärmeisolierendes Material umfassen.

4. Spannofen nach einem der Ansprüche 1 bis 3, ferner umfassend einen Luftzirkulationsmechanismus, der die Luft, die durch Ansaugen durch die Saugöffnungen (2) zurückgewonnen wird, zu den Blasöffnungen (1) überträgt, nachdem die Temperatur der Luft auf eine vorgeschriebene Temperatur geändert wurde; und, innerhalb eines Pfades, in dem die Temperatur der Luft, die durch Ansaugen durch die Saugöffnungen (2) zurückgewonnen wird, auf die vorgeschriebene Temperatur geändert wird, einen Luftauslassmechanismus (21) zum Auslassen von Luft nach außerhalb des Spannofens und einen Luftzufuhrmechanismus (22) zum Aufnehmen von Luft von außerhalb des Spannofens.

5. Spannofen nach einem der Ansprüche 1 bis 4, umfassend eine Kammer, wobei die Länge der Blasöffnung (1) in der Querrichtung der Folie (5) und die Länge der Saugöffnung (1) in der Querrichtung der Folie (5), die in der Kammer angeordnet sind, gleich sind.

6. Verfahren zum Herstellen einer thermoplastischen Harzfolie unter Verwendung des Spannofens nach einem der Ansprüche 1 bis 5, wobei, wenn die Zone in eine Vielzahl von Räume durch die Ebenen, die die Abschirmplatten (13) darin aufweisen, unterteilt wird, in mindestens einer Zone in jedem der Räume die Menge der Luft, die aus den Blasöffnungen (1) eingeblasenen wird, gleich der Menge der Luft ist, die durch Ansaugen von den Saugöffnungen (2) zurückgewonnenen wird.

7. Verfahren zum Herstellen einer thermoplastischen Harzfolie unter Verwendung des Spannofens nach einem der Ansprüche 1 bis 5, wobei, wenn die Kammer in eine Vielzahl von Räume durch die Ebenen, die die Abschirmplatten (13) darin aufweisen, unterteilt wird, in mindestens einer Kammer in jedem der Räume die Menge der Luft, die aus den Blasöffnungen (1) eingeblasenen wird, gleich der Menge der Luft ist, die durch Ansaugen von den Saugöffnungen (2) zurückgewonnenen wird.

## Revendications

1. Four de traitement sur rame comprenant des orifices de soufflage (1) qui soufflent de l'air chauffé à une température prescrite, et des orifices d'aspiration (2) qui récupèrent l'air dans ledit four de traitement sur rame, qui sont agencés afin de s'étendre le long de la direction transversale du film (5), ledit four de traitement sur rame comprenant des pinces (8) qui saisissent les deux parties extrémités du film (5) dans la direction transversale du film (5) ; des rails de pinces (9) qui sont les chemins de circulation desdites pinces (8) ; et une ou plusieurs zones séparées par des parois (17) à l'exception des ouvertures destinées à transporter le film (5) le long de la direction du transport du film ; où ladite zone est constituée par une ou plusieurs chambres ; ledit four de traitement sur rame comprenant en outre des plaques de protection (13) à une position située entre une extrémité (12a, 12b) dudit orifice de soufflage (1) dans la direction transversale du film (5), et la partie préhension de pinces (11a, 11b) la plus proche, et à une position située entre l'autre extrémité (12a, 12b) dudit orifice de soufflage (1) dans la direction transversale du film, et la partie préhension de pinces (11a, 11b) la plus proche, respectivement, lesdites plaques de protection (13) se situant dans des plans sensiblement perpendiculaires au plan du film, et sensiblement parallèles auxdits rails de pinces (9).

2. Four de traitement sur rame selon la revendication 1, où lesdites plaques de protection (13) comprennent un mécanisme mobile destiné à déplacer lesdites plaques de protection (13) selon une modification des positions desdits rails de pinces (9).

3. Four de traitement sur rame selon la revendication 1 ou 2, où lesdites plaques de protection (13) comprennent un matériau isolant thermique.

4. Four de traitement sur rame selon l'une quelconque des revendications 1 à 3, comprenant en outre un mécanisme de circulation de l'air qui transfère l'air récupéré par aspiration à travers lesdits orifices d'aspiration (2) vers lesdits orifices de soufflage (1) après avoir modifié la température dudit air à une température prescrite ; et, dans un chemin où la température dudit air récupérée par aspiration à travers lesdits orifices d'aspiration (2) est modifiée à une température prescrite, un mécanisme d'évacuation de l'air (21) destiné à évacuer l'air à l'extérieur dudit four de traitement sur rame, et un mécanisme d'approvisionnement en air (22) destiné à faire rentrer l'air à partir de l'extérieur dudit four de traitement sur rame.

5. Four de traitement sur rame selon l'une quelconque des revendications 1 à 4, comprenant une chambre où la longueur de l'orifice de soufflage (1) dans la direction transversale du film (5), et la longueur de l'orifice d'aspiration (1) dans la direction transversale du film (5), qui sont agencés dans ladite chambre, sont identiques.

6. Procédé de production d'un film de résine thermoplastique utilisant ledit four de traitement sur rame selon l'une quelconque des revendications 1 à 5, où, lorsque ladite zone est divisée en une pluralité d'espaces par des plans présentant lesdites plaques de protection (13), dans une zone au moins, la quantité d'air soufflée par lesdits orifices de soufflage (1), est égale à la quantité d'air récupérée par aspiration à partir desdits orifices d'aspiration (2) dans chacun desdits espaces.

7. Procédé de production d'un film de résine thermoplastique utilisant ledit four de traitement sur rame selon l'une quelconque des revendications 1 à 5, où, lorsque ladite chambre est divisée en une pluralité d'espaces par des plans présentant lesdites plaques de protection (13), dans une chambre au moins, la quantité d'air soufflée par lesdits orifices de soufflage (1), est égale à la quantité d'air récupérée par aspiration à partir desdits orifices d'aspiration (2) dans chacun desdits espaces.
